# EUROPÄISCHE PATENTSCHRIFT

(11) **EP 1 730 981 B1**
(45) Veröffentlichungstag und Bekanntmachung des Hinweises auf die Patenterteilung: **23.09.2009**
(21) Anmeldenummer: 05708047.5
(22) Anmeldetag: 23.02.2005
(51) Int. Cl.: H04W 24/00

(54) **VERFAHREN ZUR FEHLERERKENNUNG UND ZUR UNTERSTÜTZUNG VON REKONFIGURATIONSENTSCHEIDUNGEN IN MOBILFUNKNETZWERKEN MIT REKONFIGURIERBAREN ENDGERÄTEN SOWIE ENTSPRECHENDE NETZWERKELEMENTE UND KOMPONENTEN**
METHOD FOR DETECTING ERRORS AND SUPPORTING RECONFIGURATION DECISIONS IN MOBILE RADIO NETWORKS COMPRISING RECONFIGURABLE TERMINALS, AND CORRESPONDING NETWORK ELEMENTS AND COMPONENTS
PROCEDE DE DETECTEUR D'ERREUR ET D'ASSISTANCE DE DECISIONS DE RECONFIGURATION DANS DES RESEAUX DE TELEPHONIE MOBILE AVEC DES TERMINAUX RECONFIGURABLES ET ELEMENTS RESEAU ET COMPOSANTS CORRESPONDANTS

(30) Priorität: 02.04.2004 DE 102004016381
(43) Veröffentlichungstag der Anmeldung: 13.12.2006
(60) Teilanmeldung: 09010240.1
(73) Patentinhaber: SIEMENS AKTIENGESELLSCHAFT, 80333 München (DE)
(72) Erfinder: DILLINGER, Markus, 82041 Oberhaching (DE); NIEDERMEIER, Christoph, 80999 München (DE); SCHMID, Reiner, 80538 München (DE)
(86) Internationale Anmeldenummer: PCT/EP2005/050760
(87) Internationale Veröffentlichungsnummer: WO 2005/096653

(56) Entgegenhaltungen:
- EP-A- 1 239 688
- EP-A- 1 263 249
- WO-A-02/51030
- WO-A-96/24230

## Beschreibung

Die Erfindung betrifft Verfahren, Netzwerkelemente und Komponenten für Mobilfunknetzwerken mit rekonfigurierbaren Endgeräten, bei denen die Nutzung einer neuen bisher nicht unterstützten Radiotechnologie durch Austausch einer Software erfolgt, die den Transceiver des Endgeräts konfiguriert.

Die Entwicklung und der Einsatz einer neuen Technologie in mobilen Telekommunikationsnetzwerken erfordert einen hohen Aufwand, um ein reibungsloses Zusammenspiel der einzelnen Komponenten zu erreichen. Das wird herkömmlicherweise durch aufwendige Standardisierung, siehe z.B. GSM oder UMTS, und Tests der einzelnen Komponenten erzielt. Dies gilt insbesondere für die Zusammenarbeit der Netzwerkelemente mit den Endgeräten. Bei gegenwärtigen Endgeräten ist jedoch die Nutzung von Radiotechnologien durch ein Endgerät auf eine genau definierte Auswahl beschränkt, da die Nutzung einer Radiotechnologie den Einsatz einer jeweils speziellen Hardware für die jeweilige Radiotechnologie erfordert. Bei rekonfigurierbaren Endgeräten bzw. bei Software Defined Radio Geräten, kann aufgrund eines softwareprogrammierbaren Transceivers dagegen die Nutzung einer neuen bisher nicht unterstützten Radiotechnologie durch Austausch der Software erfolgen, die den Transceiver konfiguriert. Neue Funktechniken und Standards können daher durch einen einfachen Softwaredownload auf das Terminal genutzt werde n, d.h. auch bereits vorhandene Terminals können im nachhinein neue Technologien im Radiobereich nutzen.

Der jetzige UMTS Standard stellt bspw. hohe Anforderungen an die Terminals, was u.a. dazu führt, dass einige Hersteller bereits einen "UMTS Lightweight" Standard in Betracht ziehen, welcher eine niedrigere Komplexität aufweist, jedoch in bestimmten Situationen dieselbe Performance liefert wie der originäre Standard. Dies setzt aber u.a. voraus, dass nicht nur das Endgerät, sondern auch die involvierte Basisstation bzw. Base Station den modifizierten Standard interpretieren kann.

Durch diese neue Technologie für Endgeräte ist allerdings nicht mehr garantiert, dass das Zusammenspiel der Endgeräte, wie z.B. Handys, mit einer Basisstation, sowie den anderen Komponenten im Netzwerk vollständig getestet werden kann. Die Rekonfigurationsfähigkeit der Endgeräte kann dazu führen, dass selbst bei größter Sorgfalt Störungen aufgrund eines Softwaredownloads entstehen. Ursache dafür können Fehler in der aufgebrachten Software selber sein, die darauf zurückzuführen sind, dass das Zusammenspiel mit den Netzwerkkomponenten für diese Geräte nicht ausreichend getestet werden konnte.

In der europäischen Patentanmeldung EP-A-1 263 249 ist ein Verfahren und eine Station zum Fehlermanagement für Softwaregestützte Funkstationen mittels Analyse von Funkprotokollen beschrieben, bei dem zumindest ein Teil der Software einer Station über eine Schnittstelle aktualisiert wird und eine Fehlerüberwachung der Station hinsichtlich der Aktualisierung durchgeführt wird. Zur Verbesserung der Fehlerüberwachung wird hier vorgeschlagen, fehlererkennungsrelevante Daten der Station für eine zeitversetzte Auswertung in der Station oder einer Netzeinrichtung zur protokollieren. Vorteilhafterweise können Sendeleistungswerte protokolliert werden, um diese zu einem späteren Zeitpunkt nach einer Übertragung zu einer Analyseeinrichtung im Kommunikationsnetz mit entsprechenden Netzprotokollanweisungen zu vergleichen, die maximale oder zu ändernde Sendeleistungswerte für die Station vorgeben.

Die der Erfindung zu Grunde liegende Aufgabe besteht nun darin, ein Verfahren zur Fehlererkennung und zur Unterstützung von Rekonfigurations-Entscheidungen in Mobilfunknetzwerken mit rekonfigurierbaren Endgeräten anzugeben, bei dem eine höheren Zuverlässigkeit der Interoperabilität von Terminals und Netzwerkelementen in Mobilfunknetzwerken, die rekonfigurierbare Terminals unterstützen, erreicht wird.

Diese Aufgabe wird durch die Merkmale des Patentanspruchs 1 gelöst. Die weiteren Ansprüche betreffen bevorzugte Ausgestaltungen des erfindungsgemäßen Verfahrens sowie ein Netzwerkelement und einen Agenten zur jeweiligen Durchführung des erfindungsgemäßen Verfahrens.

Die Erfindung betrifft im Wesentlichen eine jeweilige Agentenplattform in Netzwerkelementen sowie herstellerspezifische Agenten, die entweder direkt oder über Agenten-Proxies von Agenten-Providern auf diesen Plattformen installiert werden, wobei die Agenten dann über eine definierte Schnittstelle der Agentenplattform Rohinformationen über aufgetretene Betriebsfehler erhalten und zusammen mit herstellerspezifischen Informationen zu den jeweiligen Endgeräten bzw. Endgerätetypen, die nur dem jeweiligen Hersteller bekannt sind, entsprechende verdichtete Entscheidungsinformationen zur Beurteilung von Fehlerfällen und/oder zur Optimierung von Rekonfigurations-Entscheidungen bilden und diese über die definierte Schnittstelle dem Netzwerkelement bzw. dem Netzwerkbetreiber und/oder dem Agenten-Provider bzw. dem Endgerätehersteller zur Verfügung stellen. Dies führt zu einer höheren Zuverlässigkeit der Interoperabilität von Terminals und Netzwerkelementen in Mobilfunknetzwerken mit rekonfigurierbaren Terminals.

Die Erfindung wird nachfolgend anhand von in der Zeichnung dargestellten Ausführungsbeispielen näher erläutert.
Dabei zeigt
- Figur 1: eine Darstellung zur Erläuterung eines ersten Ausführungsbeispiels der Erfindung und
- Figur 2: eine Darstellung zur Erläuterung eines zweiten Ausführungsbeispiels der Erfindung.

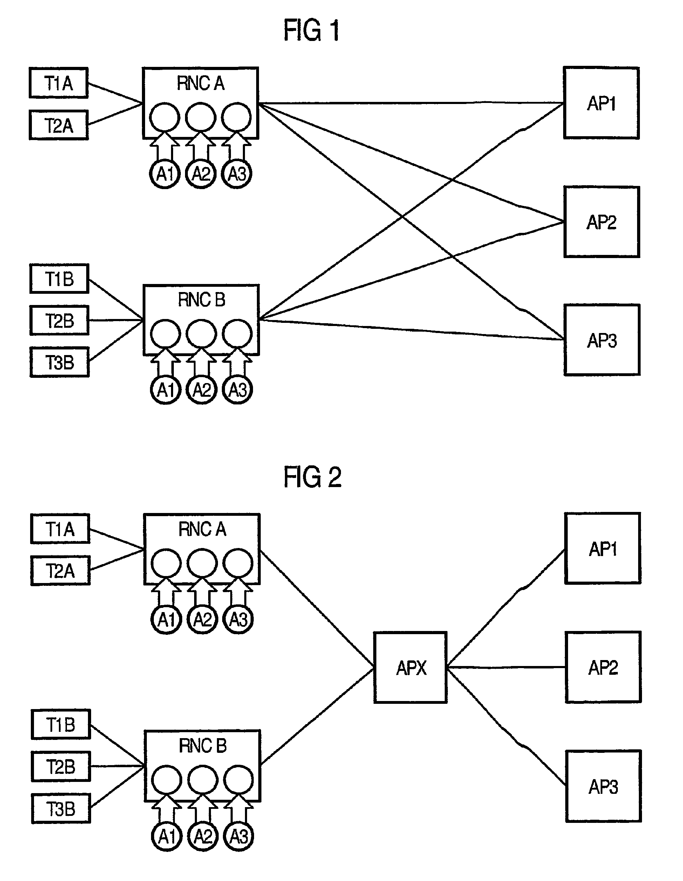

In **Figur 1** ist eine Darstellung mit agenten-fähigen Netzwerkelementen in einem Radio Access Netzwerk gezeigt, wobei ein Netzwerkelement in Form eines Radio Network Controllers bzw. RNCs **RNCA** mit zwei Terminals **T1A** und **T2A** und ein weiteres Netzwerkelement in Form eines Radio Network Controllers **RNCB** mit drei Terminals **T1B, T2B** und **T3B** verbunden bzw. verbindbar sind und jeweils von Agenten - Providern **AP1, AP2** und **AP3** direkt bzw. unmittelbar mit Agenten **A1, A2** und **A3** versorgt werden. In diesem Fall sind die agenten-fähigen Knoten also die RNCs eines UMTS. In anderen Technologien können diese in Netzwerkelementen mit analoger Funktion eingesetzt werden. In Wireless LAN (PLAN) Netzwerken stellt bspw. eine Verwendung in den WLAN Access Points eine solche analoge Verwendung dar.
Die Agenten tauschen direkt mit dem jeweiligen Agenten - Provider , d.h. in der Regel der Hersteller selbst oder ein Service-Provider, Daten aus. Dies erfordert jedoch, dass dem Agenten-Provider alle Einsatzorte der Agenten unmittelbar bekannt sind. Der Agenten-Provider muss daher wissen, auf welchen RNCs seine Agenten installiert sind.

Die Agenten **A1, A2** und **A3** erhalten über definierte Schnittstellen einer Agentenplattform des Netzwerkelements Rohinformationen, die für die Beurteilung von Fehlerfällen sowie die optimierte Entscheidungsfindung hinsichtlich Rekonfiguration von Terminals notwendig sind. Diese werden innerhalb der Komponente bearbeitet bzw. zu Entscheidungsinformationen verdichtet.

In **Figur 2** ist ebenfalls eine Darstellung mit agenten-fähigen Netzwerkelementen in einem Radio Access Netzwerk gezeigt, die sich von der in Figur 1 gezeigten Darstellung nur dadurch unterscheiden, dass die RNCs **RNCA** und **RNCB** nicht direkt, sondern über einen Agenten-Proxy **APX** von den Agenten-Providern **AP1, AP2** und **AP3** mit Agenten **A1, A2** und **A3** versorgt werden. Ein Agenten-Proxy **APX** vermittelt die Kommunikation zwischen den RNCs, auf denen Agenten installiert sind, mit ihren Providern, wobei der Agenten-Proxy eine zentrale Stelle darstellt, auf den die Netzwerkelemente zugreifen und der das Management übernimmt, welcher Agenten-Provider die gewünschten Informationen liefert. Die Provider **AP1, AP2** und **AP3** wiederum können Anfragen und Nachrichten für ihre Agenten **A1, A2** und **A3** direkt an den Agenten-Proxy **APX** schicken, der die Nachrichten an die betroffenen Agenten verteilt. Im Zuge der Installation bzw. Deinstallation werden die RNCs, auf denen Agenten bestimmter Hersteller installiert sind, auf dem Agenten-Proxy **APX** registriert, so dass über den Proxy **APX** die einzelnen Agenten **A1, A2** und **A3** auf den RNCs **RNCA** und **RNCB** angesprochen werden können.

Die Netzwerkelemente in Mobilfunknetzwerken, bspw. RNCs, werden mit Bereichen bzw. Agentenplattformen für solc he Agenten ausgestattet, wobei die Plattformen z. B. die Rechenzeitzuteilung für die Agenten und deren Controlling übernehmen. Der Bereich, in dem die Agenten laufen, ist dabei so geschützt, dass ein Zugriff nur durch besonders berechtigte Benutzer, d.h. den Hersteller der jeweiligen Komponente, möglich ist. Die Agentenplattform ist dabei so ausgestaltet, dass der Agent selbst verschlüsselt übermittelt wird, die Software daher Dritten nicht zugänglich ist. Ferner muss sich die Plattform gegenüber dem Agenten autorisieren, damit gesichert ist, dass Dritte die Software nicht nutzen können. Weiterhin ist die Datenübertragung zwischen dem Agenten und dem jeweils nutzungsberechtigten Herstellern, also den Agenten-Providern, über ebensolche Maßnahmen gesichert, so dass die Daten, die ausgetauscht werden, vertraulich behandelt werden, und nur dem berechtigten Hersteller zugehen können.

Der Netzwerkbetreiber hat die Kontrolle darüber, wer Agenten auf seinen Netzwerkelementen einsetzen darf, hat aber keinen oder nur einen beschränkten Zugriff auf Daten des Agenten selbst.

Darüber hinaus gewährt das Netzwerkelement selbst nur dem jeweils berechtigten Agenten Zugriff auf die Daten. Damit können Agenten auf sichere Weise, beispielsweise vom Hersteller eines bestimmten Terminaltyps, erzeugt werden. Diese Agenten können dann, ohne dass Dritte auf die vertraulichen Informationen Zugriff nehmen können, auf den Netzwerkelementen eigenständig Aufgaben ausführen.

Die Anwendung der Erfindung ist jedoch nicht nur beschränkt auf RNCs, ein weiterer Einsatzbereich der Erfindung besteht darüber hinaus in ihrem Einsatz auf Base Transceiver Stations (BTS). Hier können durch den Einsatz von Agenten, zusätzlich zu den bis dahin genannten Anwendungsbeispielen, gezielt herstellerspezifische Erweiterungen des jeweiligen Mobilfunkstandards realisiert werden. Hierbei wird davon ausgegangen, dass zukünftig Hersteller von Mobilfunkendgeräten eigene herstellerspezifische Erweiterungen des Mobilfunkstandards verwenden werden, um ihre Geräte mit zusätzlichen Vorteilen auszustatten. Solche können z.B. sein: Reduktion der Datenrate durch Verwendung eines schmaleren Frequenzbandes, wodurch die vorhandene Kapazität der Mobilfunkzelle besser ausgenutzt werden kann, da sich mehr Terminals ein Band teilen können.

Diese nicht standardkonformen Endgeräte erfordern allerdings eine herstellerspezifische Erweiterung der Funktionalität der BTS, da diese den die Erweiterungen zum Standard unterstützen muss. Diese Funktionalität kann durch den Hersteller des Terminals durch die Bereitstellung entsprechender Agenten für die BTS verfügbar gemacht werden. Damit können solche Endgeräte mit einer beliebigen BTS, die mit einer Agentenplattform ausgestattet sind, genutzt werden, ohne das der Hersteller der BTS solche Standarderweiterungen bei der Konstruktion der BTS gezielt für bestimmte Hersteller berücksichtigen muss. Der Hersteller des Endgeräts muss zudem nicht alle Details seiner herstellerspezifischen Erweiterung offenlegen, da diese durch den jeweils zugehörigen Agenten auf der BTS verarbeitet werden können. Die Auslegung der Schnittstelle der Agentenplattform mit der BTS kann zudem sicherstellen, dass die herstellerspezifischen Standarderweiterungen nicht mit dem Verhalten anderer Mobilfunkteilnehmer in Konflikt geraten.

### Fehleranalyse and Fehlerdatenerhebung

Die Netzwerkelemente stellen dabei über definierte Schnittstellen einer Agentenplattform, dem Agenten eines Herstellers, Information über in Zusammenhang mit den Geräten des betreffenden Herstellers aufgetretene Fehler zur Verfügung. Dazu gehören unter anderem: Verletzungen der Netzwerkprotokolle, Verletzungen des Radio-Standards, z.B. falls das Terminal einen anderen Frequenzbereich als gefordert verwendet oder Zeitvorgaben verletzt, oder andere Vorkommnisse, die zu einer Störung des Netzwerkes führen.

Informationen über derartige Fehlfunktionen fallen jedoch zumeist im Bereich des Netzwerkbetreibers an, der diese jedoch nur unzureichend interpretieren kann, da er nicht über die vollständige, im allgemeinen nicht-öffentlich zugängliche Spezifikation des betroffenen Gerätes verfügt. Diese Information ist jedoch erforderlich, wenn ein reibungsfreier Betrieb des Netzwerkes gewährleistet werden soll. Insbesondere müssen Geräte, die eine wesentliche Beeinträchtigung des Netzwerkbetriebs verursachen, identifiziert und durch geeignete Maßnahmen daran gehindert werden, weiterhin den Betrieb des Netzwerks zu stören. Dies kann z.B. durch gezieltes Aufbringen von "bug-fixes" in der Terminalsoftware geschehen. Dazu ist jedoch eine Analyse der Betriebsdaten und Kommunikation mit den Netzwerkelementen notwendig. Die Übermittlung sämtlicher Daten an den Hersteller hätte jedoch einen unvertretbar hohen Kommunikationsbedarf zufolge und würde die Übermittlung sensitiver Daten über das Verhalten von Mobilfunknutzern einschließen. Zudem ist das notwendige Vorgehen abhängig von der Art des verwendeten Terminals und kann auf Informationen beruhen, die der Hersteller nicht preisgeben möchte.

Der Agent sammelt relevante Fehlerfälle und übermittelt Daten bzw. verdichtete Informationen darüber an den Hersteller. Zudem können die Fehler auch durch den Agenten analysiert und notwendige Entscheidungen getroffen werden. So z.B. die Rekonfiguration des Terminals auf einen "failsafe"-Default-Mode, die Einleitung eines Softwaredownload, um fehlerhafte Software durch neuere zu ersetzen, oder die Stilllegung des Terminals, wenn ein betriebsicherer Zustand nicht erreicht werden kann. Dies wird durch spezielle Kommandos erreicht, die der Agent dem Terminal schicken kann. Diese sind durch Autorisierungskodes so abgesichert, dass ein Mißbrauch durch Dritte ausgeschlossen ist.

### Unterstützung bei der Rekonfigurations-Entscheidung

Solche Informationen werden zudem auch für Entscheidungen/Algorithmen benötigt, die eine möglichst optimale Entscheidung über den Wechsel zwischen Radiotechnologien treffen sollen. Diese müssen daher in einer Weise bereitgestellt werden, die es den Betreibern der Netzwerke erlaubt, eine möglichst optimale Ausnutzung ihrer Netzwerke zu erreichen, ohne die betreffende Information öffentlich, insbesondere aber Herstellern von Netzwerkelementen (und der darauf laufenden Software) bekannt machen zu müssen. Solche Informationen können unter anderem die Eigenschaften der Endgeräte wie den Energieverbrauch des Terminals in bestimmten Radio-Modes, die Zeitdauer der Rekonfiguration oder die genauen Charakteristika des Transceivers betreffen.

Das Netzwerkelement richtet eine Anfrage an der Agenten des jeweiligen Herstellers, die dieser anhand der nur ihm zugänglichen Daten sowie der Information, die im Rahmen der Anfrage vom Netzwerkelement geliefert wird, bearbeitet. Der Agent schickt als Antwort auf die Anfrage eine Empfehlung an das Netzwerkelement, die zur Optimierung der Abläufe im Netzwerk verwendet werden kann. Konfigurationsparameter rekonfigurierbarer Terminals sowie herstellerspezifische Rekonfigurationsmechanismen werden so innerhalb des Agenten gekapselt. Weder der Netzwerkoperator noch der Benutzer des mobilen Terminals noch andere Gerätehersteller haben Zugriff auf diese Daten.

Entscheidungen über die optimale Rekonfiguration werden, wie bereits oben angedeutet, teilweise auf herstellerspezifische Agenten ausgelagert, die aufgrund der ihnen zur Verfügung gestellten Informationen und der herstellerspezifischen Daten, die nur ihnen bekannt sind, Entscheidungsvorschläge erstellen, die der RNC berücksichtigen kann.

### Vorteile

Mit Agentenfähigkeit ausgestattete Netzwerkelemente, wie z. B. RNCs, Access Points, und analoge Geräte, können rekonfigurierbare Terminals, wie z.B. Mobiltelephone, Private Digital Assistants (PDAs), oder Notebooks, deutlich besser unterstützen als herkömmlich beschaffene Netzwerkelemente.

Die in Folge der freien Programmierung des Protokollstacks der Endgeräte höhere Rate an möglichen Fehlern kann durch die Einbeziehung von herstellerspezifischen Algorithmen/Informationen besser kontrolliert werden. Insbesondere können auftretende Fehler besser erkannt und interpretiert w erden, da vom Hersteller des Gerätes bereitgestellte Software diese Funktion übernehmen kann. Dies erlaubt die richtige Interpretation von Fehlfunktionen und die Einleitung geeigneter Maßnahmen, wie z.B. die Stilllegung bzw. die Einleitung der Rekonfiguration auf einwandfrei arbeitende "default"-Modi oder die Erkennung der Notwendigkeit eines "updates" der Software. Das System kann zudem zur Früherkennung von Fehlerquellen in der Software des Terminals dienen, indem es Informationen über die Häufigkeit von Fehler und deren Art sammelt und dem Hersteller zur Verfügung stellt.

Eine weitere Verbesserung der Zuverlässigkeit kann auch durch die Bereitstellung von herstellerspezifischen "Fallback"-Aktionen im Fehlerfall erreicht werden, die es auch ohne "update" der Software des Endgeräts erlauben, einen normalen Betrieb trotz vorhandener Fehler fortzusetzen, bis ein entsprechender Softwareupdate für das Endgerät bereitsteht.

Ein weiterer Vorteil der Erfindung liegt in der verbesserten Art und Weise, in der Entscheidungen über die Rekonfiguration der Endgeräte getroffen werden können. Die Agenten können Spezifika des Herstellers bei der Entscheidung berücksichtigen, ohne dass diese Details öffentlich bekannt gemacht werden müssen. Zudem erlaubt die verwendete Technik, diese herstellerspezifischen Software-Komponenten leicht auszutauschen und durch eine neue zu ersetzen, womit Änderungen an Endgeräten sowie der Einführung neuer Endgeräte Rechnung getragen werden kann.

Zudem erlaubt die Erfindung den schnelleren Einsatz von Erweiterungen von Mobilfunkstandards. Damit können neue herstellerspezifische Erweiterungen vorhandener Standards, die z.B. zu einer besseren Nutzung der Ressourcen in Mobilfunkzellen beitragen können, auf einfache Weise in Mobilfunknetzwerken, die mit BTSs gemäß der vorliegenden Erfindung ausgestattet sind, eingesetzt werden.

## Patentansprüche

1. Verfahren zur Fehlererkennung bei rekonfigurierbaren Endgeräten und/oder zur Unterstützung von Rekonfigurations-entscheidungen,
bei dem Netzwerkelemente (RNCA, RNCB) mit einer AgentenPlattform durch Agenten-Provider (AP1, AP2 und AP3) direkt oder über mindestens einen Agenten-Proxy (APX) mit Agenten (A1, A2, A3) versorgt werden, wobei sich die Agentenplattform beim jeweiligen Agenten-Provider (AP1, AP2 und AP3) autorisiert, die Agentenplattform dem Agenten-Provider die Einrichtung eines Agenten (A1, A2, A3) mit bestimmten Zugriffsrechten erlaubt und die Kommunikation zwischen Agentenplattform und Agenten-Provider (AP1, AP2 und AP3) verschlüsselt wird,
bei dem die Agenten (A1, A2, A3) über geschützte Speicherbereiche verfügen und über definierte Schnittstellen der Agentenplattform Rohinformationen geeignet zur Beurteilung von Fehlerfällen und/oder zur Optimierung von Rekonfigurations-Entscheidungen vom jeweiligen Netzwerkelement (RNCA, RNCB) erhalten und
bei dem diese Rohinformationen innerhalb des jeweiligen Agenten (A1, A2, A3) bearbeitet und daraus Entscheidungsinformationen geeignet zur Beurteilung von Fehlerfällen und/oder zur Optimierung von Rekonfigurations-Entscheidungen gebildet werden und diese über die definierte Schnittstelle einem Netzwerkelement (RNCA, RNCB) bzw. einem Netzwerkbetreiber und/oder dem Agenten-Provider (AP1, AP2 und AP3) bzw. einem Endgerätehersteller zur Verfügung gestellt werden.

2. Verfahren nach Anspruch 1,
bei dem die Netzwerkelemente (RNCA, RNCB) einem jeweiligen Agenten (A1, A2, A3) eines Endgeräteherstellers über die definierten Schnittstellen der Agentenplattform Rohinformationen über Betriebsfehler des jeweiligen Endgeräts übergeben und der Agent (A1, A2, A3) auf Anfrage des Agentenproviders (AP1, AP2 und AP3) auf Basis dieser Rohinformationen gebildete Entscheidungsinformationen an den Agenten-Provider (AP1, AP2 und AP3) liefert.

3. Verfahren nach Anspruch 2,
bei dem die Entscheidungsinformationen Informationen über aufgetretene Verletzungen eines Netzwerkprotokolls und/oder Radio-Standards enthalten.

4. Verfahren nach Anspruch 1,
bei dem von Netzwerkelementen (RNCA, RNCB) Entscheidungen über die optimale Rekonfiguration teilweise auf Endgerätehersteller-spezifische Agenten (A1, A2, A3) ausgelagert werden, die aufgrund der ihnen zur Verfügung gestellten Rohinformationen und herstellerspezifischen Daten bezüglich des jeweiligen Endgeräts, die nur dem Endgerätehersteller zugänglich sind,
Entscheidungsinformationen für das Netzwerkelement (RNCA, RNCB) erstellen.

5. Verfahren nach Anspruch 4,
bei dem die herstellerspezifischen Daten den Energieverbrauch des betreffenden Terminals in bestimmten Radio-Modes und/oder die Zeitdauer der Rekonfiguration und/ oder die genauen Charakteristika eines Transceivers enthalten.

6. Netzwerkelement (RNCA, RNCB) zur Durchführung des Verfahrens nach einem der vorhergehenden Ansprüche,
- mit Mitteln zum Erhalt von Agenten (A1, A2, A3) und
- mit Mitteln zum Erhalt von Entscheidungsinformationen geeignet zur Beurteilung von Fehlerfällen und/oder zur Optimierung von Rekonfigurations-Entscheidungen.

7. Agent (A1, A2, A3) für Mobilfunknetzwerke zur Durchführung des Verfahrens nach einem der Ansprüche 1 bis 5,
- mit mindestens einem geschützten Speicherbereich,
- mit Mitteln zum Erhalt von Rohinformationen geeignet zur Beurteilung von Fehlerfällen und/oder zur Optimierung von Rekonfigurations-Entscheidungen und
- mit Mitteln zur Bildung von Entscheidungsinformationen geeignet zur Beurteilung von Fehlerfällen und/oder zur Optimierung von Rekonfigurations-Entscheidungen aus diesen Rohinformationen.

## Claims

1. Method for detecting faults in the case of reconfigurable terminals and/or for supporting reconfiguration decisions
wherein network elements (RNCA, RNCB) having an agent platform are supplied directly or via at least one agent proxy (APX) with agents (A1, A2, A3) by agent providers (AP1, AP2, and AP3), with the agent platform authorising itself with the respective agent provider (AP1, AP2, and AP3), the agent platform allowing the agent provider to set up an agent (A1, A2, A3) having specific access rights, and communication between the agent platform and agent provider (AP1, AP2, and AP3) being encrypted,
wherein the agents (A1, A2, A3) have protected storage areas and receive raw information which is suited to evaluating fault incidents and/or optimising reconfiguration decisions from the respective network element (RNCA, RNCB) over defined interfaces of the agent platform, and
wherein said raw information is processed inside the respective agent (A1, A2, A3) and decision information which is suited to evaluating fault incidents and/or optimising reconfiguration decisions is formed therefrom and made available to a network element (RNCA, RNCB) or, as the case may be, network operator and/or agent provider (AP1, AP2, and AP3) or, as the case may be, terminal manufacturer over the defined interface.

2. Method according to claim 1
wherein the network elements (RNCA, RNCB) transfer raw information about operational faults of the respective terminal to a terminal manufacturer's respective agent (A1, A2, A3) over the defined interfaces of the agent platform and the agent (A1, A2, A3), when requested by the agent provider (AP1, AP2, and AP3), supplies decision information formed on the basis of said raw information to the agent provider (AP1, AP2, and AP3).

3. Method according to claim 2
wherein the decision information contains information about occurring infringements of a network protocol and/or radio standard.

4. Method according to claim 1
wherein decisions about optimal reconfiguring are partially relocated by network elements (RNCA, RNCB) to manufacturer-specific agents (A1, A2, A3) which, using the raw information made available to them and the manufacturer-specific data, accessible only to the device manufacturer, concerning the respective terminal, produce decision information for the network element (RNCA, RNCB).

5. Method according to claim 4
wherein the manufacturer-specific data includes the relevant terminal's energy consumption in specific radio modes, and/or the duration of reconfiguring, and/or the transceiver's precise characteristics.

6. Network element (RNCA, RNCB) for implementing the method according to one of the preceding claims,
- with means for receiving agents (A1, A2, A3) and
- with means for receiving decision information which is suited to evaluating fault incidents and/or optimising reconfiguration decisions.

7. Agent (A1, A2, A3) for mobile-radio networks for implementing the method according to one of claims 1 to 5,
- with at least one protected storage area,
- with means for receiving raw information which is suited to evaluating fault incidents and/or optimising reconfiguration decisions and
- with means for forming decision information which is suited to evaluating fault incidents and/or optimising reconfiguration decisions from this raw information.

## Revendications

1. Procédé de détection d'erreurs dans le cas de terminaux reconfigurables et/ou de support de décisions de reconfiguration, dans lequel
- des fournisseurs d'agents (AP1, AP2 et AP3) fournissent, directement ou par l'intermédiaire d'au moins un proxy agent (APX), des agents (A1, A2, A3) à des éléments de réseau (RNCA, RNCB) avec une plate-forme d'agents, la plate-forme d'agents s'autorisant auprès de chaque fournisseur d'agents (AP1, AP2 et AP3), la plate-forme d'agents autorisant au fournisseur d'agents la création d'un agent (A1, A2, A3) avec certains droits d'accès et la communication entre la plate-forme d'agents et le fournisseur d'agents (AP1, AP2 et AP3) étant chiffrée,
- les agents (A1, A2, A3) disposent de zones de mémoire protégées et reçoivent de l'élément de réseau respectif (RNCA, RNCB), via des interfaces définies de la plate-forme d'agents, des informations brutes appropriées pour l'appréciation de cas d'erreurs et/ou l'optimisation de décisions de reconfiguration et
- ces informations brutes sont traitées dans l'agent respectif (A1, A2, A3) et des informations de décision appropriées pour l'appréciation de cas d'erreurs et/ou l'optimisation de décisions de reconfiguration sont formées sur cette base et celles-ci sont mises à la disposition d'un élément de réseau (RNCA, RNCB) resp. d'un exploitant de réseau et/ou du fournisseur d'agents (AP1, AP2, AP3) resp. d'un fabricant de terminaux via l'interface définie.

2. Procédé selon la revendication 1, dans lequel les éléments de réseau (RNCA, RNCB) transfèrent à un agent respectif (A1, A2, A3) d'un fabricant de terminaux, via les interfaces définies de la plate-forme d'agents, des informations brutes sur des erreurs d'exploitation du terminal respectif et l'agent (A1, A2, A3), à la demande du fournisseur d'agents (AP1, AP2 et AP3), fournit au fournisseur d'agents (AP1, AP2 et AP3) des informations de décision formées sur la base de ces informations brutes.

3. Procédé selon la revendication 2, dans lequel les informations de décision contiennent des informations sur des violations d'un protocole de réseau et/ou de standards radio qui sont survenues.

4. Procédé selon la revendication 1, dans lequel des décisions sur la reconfiguration optimale sont externalisées en partie sur des agents (A1, A2, A3) spécifiques aux fabricants de terminaux par des éléments de réseau (RNCA, RNCB), lesquels agents créent des informations de décision pour l'élément de réseau (RNCA, RNCB) sur la base des informations brutes mises à leur disposition et des données spécifiques aux fabricants, concernant le terminal respectif et auxquelles seul le fabricant de terminaux a accès.

5. Procédé selon la revendication 4, dans lequel les données spécifiques aux fabricants contiennent la consommation énergétique du terminal concerné dans certains modes radio et/ou la durée de temps de la reconfiguration et/ou les caractéristiques exactes d'un transcepteur.

6. Élément de réseau (RNCA, RNCB) pour exécuter le procédé selon l'une des revendications précédentes, comportant
- des moyens de réception d'agents (A1, A2, A3) et
- des moyens de réception d'informations de décision appropriées pour l'appréciation de cas d'erreurs et/ou l'optimisation de décisions de reconfiguration.

7. Agent (A1, A2, A3) pour des réseaux radio mobiles permettant d'exécuter le procédé selon l'une des revendications 1 à 5, comportant
- au moins une zone de mémoire protégée,
- des moyens de réception d'informations brutes appropriées pour l'appréciation de cas d'erreurs et/ou l'optimisation de décisions de reconfiguration et
- des moyens pour former, à partir de ces informations brutes, des formation d'informations de décision appropriées pour l'appréciation de cas d'erreurs et/ou l'optimisation de décisions de reconfiguration.
